# EUROPEAN PATENT SPECIFICATION

(11) **EP 2 867 525 B1**
(45) Date of publication and mention of the grant of the patent: **26.09.2018**
(21) Application number: 13728338.8
(22) Date of filing: 28.05.2013
(51) Int. Cl.: B29L 31/08, B29K 101/10, B29C 65/00, B23P 15/04, F03D 1/06

(54) **APPARATUS FOR ASSEMBLING BLADE SECTIONS**
VORRICHTUNG ZUM AUFBAU VON SCHAUFELABSCHNITTEN
APPAREIL POUR ASSEMBLER DES SECTIONS DE PALE

(30) Priority: 30.05.2012 EP 12170099
(43) Date of publication of application: 06.05.2015
(73) Proprietor: youWINenergy GmbH, 26135 Oldenburg (DE)
(72) Inventor: ROHDEN, Rolf, 26607 Aurich (DE)
(74) Representative: Alt, Michael
(86) International application number: PCT/EP2013/060950
(87) International publication number: WO 2013/178624

(56) References cited:
- WO-A1-2004/043679
- WO-A1-2012/019610
- DE-A1- 10 235 496
- US-A1- 2008 069 699
- US-A1- 2009 155 084
- US-A1- 2010 310 379
- US-B1- 6 638 466

## Description

The present subject matter relates to an apparatus for assembling blade sections for forming a blade for a wind turbine rotor. In particular, the apparatus for assembling blade sections according to the present subject matter enables an advantageous operation for assembling blades for large-scale wind turbines.

Further, the present subject matter relates to a method of operating the apparatus which provides a simplified and enhanced procedure for assembling blades for large-scale wind turbines.

### BACKGROUND

In a commonly known wind turbine, a plurality of blades is mounted to a hub. The hub is connected to a generator system. The generator systemgenerates electricity based on the rotational power caused by wind energy exerted on the blades. In commonly known wind turbine installations, the hub is rotatably mounted with the axis being aligned substantially horizontally, such an installation is referred to as a horizontal axis wind turbine.

In recent years, the length of wind turbine blades has increased in order to provide wind turbine installations with an output of as much as 1MW (el) or more in a single turbine. Consequently, specific restrictions relating to the transportation of elements of such wind turbine installations are introduced. However, large wind turbine installations provide an increased output, an enhanced efficiency and, besides others, several economic improvements.

Conventional rotor systems are set up with single part blades which are mounted to the hub at the construction site of the wind turbine installation. Due to the fact that large-scale wind turbine installations are frequently set up at remote locations, restrictions with respect to transportation of blades having a length of 50m or more introduce a limitation on the power output of the single wind turbine and consequently decrease the economic and energetic efficiency.

Wind turbine blades which comprise two blade sections are known in the state of the art. Said blade sections are joined longitudinally in order to enable the transportation to the construction site of the wind turbine installation as the single blade sections meet the requirements of transportability. The blade sections are assembled to form the complete blade at the construction site and the blade is mounted to the hub of the wind turbine in order to complete the rotor. Special apparatuses for assembling such multi-section blades have not been developed yet.

US 2008/069699 shows an example of blade sections which are joined longitudinally.

### SUMMARY

According to the basic concept of the present subject matter, an apparatus for assembling blade sections for forming a blade is provided. The apparatus comprises at least two members movable with respect to each other, said members having respective opposing surfaces forming a pressing space, said pressing space being adapted to receive respective joining end portions of said blade sections to be assembled, moving means for moving said members with respect to each other, controlling means for controlling said moving means, supplying means for supplying a fluid into a boundary portion between said blade sections when received in said pressing space, wherein said control means controls said moving means to exert a predetermined pressure to at least one of the joining end portions of said blade sections when received in said pressing space.

The apparatus for assembling blade sections for forming a blade according to the present subject matter is applicable to blade sections which are joinable to each other in a longitudinal direction. The apparatus for assembling blade sections according to the present subject matter is arranged with said at least two members which are movable with respect to each other. The at least two members of the apparatus for assembling blade sections can be moved in order to exert a force or a pressure to specific portions of said blade sections to be joined. Consequently, the apparatus for assembling blade sections is advantageous for joining blade sections which require a specific force or pressure to predetermine portions for joining.

In the apparatus for assembling blade sections according to the present subject matter, supply means for injecting a fluid, such as adhesive fluid, into a boundary portion between said blade sections are provided. In cooperation with the force or pressure exerted by the at least two members to the blade sections, the supply means can supply a fluid into the boundary portion between said blade sections when received in said pressing space which is formed by respective opposing surfaces of said at least two members.

The fluid which can be supplied by said supply means can be a joining fluid for forming a joint between the blade sections in order to form the blade.

According to an embodiment of the present subject matter, said members are movable with respect to each other in order to close or open said pressing space. When said members are moved with respect to each other such that said pressing space is open, no pressure or force is exerted to the blade sections, whereas a pressure or force can be exerted to the blade sections when said members are moved with respect to each other such that the pressing space is closed. Consequently, the pressing space can be brought to an operative position to enable a pressing operation of the blade sections, and can be brought to an inoperative position, i.e., an open position in order to release the blade sections.

According to an embodiment of the present subject matter, said opposing surfaces are provided with a profile which substantially corresponds to an outer profile of said joining end portions of said blade sections when assembled, when said pressing space is closed. According to this embodiment, the at least two members are provided with predefined surfaces which are adapted to the outer appearance or shape of the blade sections in the area of the joining end portions thereof in order to optimize the application of pressure or force to the blade section when said pressing space is closed, i.e., is in an operative position.

According to an embodiment of the present subject matter, said supply means is arranged to supply said fluid, i.e., said adhesive fluid, into an inlet of a flow path which is provided in said boundary portion between said blade sections when received in said pressing space, wherein said apparatus further comprises discharge means which is arranged to discharge said fluid from an outlet of said flow path. The operation of the apparatus according to the present subject matter is based on the cooperation of the at least two members which are movable with respect to each other and said supply means for supplying said fluid, i.e., said adhesive fluid, into a boundary portion between said blade sections when said blade sections are received in said pressing space. Consequently, providing an inlet of a flow path for supplying said fluid and discharge means for discharging said fluid from an outlet provides a specific advantage in the operation of the apparatus for assembling blade sections as the fluid, i.e., the adhesive fluid, can be led through the flow path from the inlet to the outlet in order to optimize the joining of said blade sections.

According to the invention, the apparatus further comprises supply monitoring means for monitoring an amount of fluid supplied by said supply means and/or discharge monitoring means for monitoring an amount of fluid discharge from said discharge means. According to this embodiment, the joining operation of said apparatus is optimized due to the information derivable from said supply monitoring means and/or said discharge monitoring means which provides an indication of the state of said fluid in said flow path. In particular, the current state of said fluid can be determined based on the information which is derivable from this embodiment such that the joining operation can be optimized.

According to an embodiment of the present subject matter, the apparatus further comprises a metering device for metering said amount of fluid supplied by said supply means. According to this embodiment, the amount of fluid supplied to said supply means can be adjusted or controlled by said metering device.

According to an embodiment of the present subject matter, said metering device is controllable based on information obtained from said supply monitoring means and/or based on information obtained from said discharge monitoring means. According to this embodiment, the amount of fluid supplied to said supply means can be adjusted or controlled by said metering device, wherein said amount of fluid can be optimized based on the current state of the fluid in said flow path.

According to an embodiment of the present subject matter, the apparatus further comprises heating means for applying heat to said joining end portions of said blade sections when received in said pressing space. The fluid supplied to the boundary portion between said blade sections can be an adhesive fluid which can be curable, e.g., by heat.

According to an embodiment of the present subject matter, said fluid is a resin, preferably a thermosetting resin. Such a fluid is advantageous for providing a permanent joint between the blade sections. In particular, in cooperation with the heating means for applying heat to said joining end portions of said blade sections, the use of a thermosetting resin provides advantages with respect to the strength of the joint between the blade sections.

According to an embodiment of the present subject matter, said moving means is formed as at least one threaded spindle connecting said at least two members. The threaded spindle can be driven by any means or even by a manual operation.

According to an embodiment of the present subject matter, a spindle drive is provided for driving said at least one threaded spindle. The spindle drive for driving said at least one threaded spindle is a simple means for providing the required movement of said at least two members with respect to each other. Such a system is accurately controllable and the threaded spindle having such a spindle drive is highly responsive for exerting the required force or pressure to the joining end portions of the blade sections. Moreover, such an arrangement is highly reliable.

According to an embodiment of the present subject matter, said moving means is formed as at least one hydraulic actuator. A hydraulic actuator is applicable for providing a specific movement of the members with respect to each other and can be accurately controlled for exerting a specific pressure.

According to an embodiment of the present subject matter, one of said at least two members is provided with a guide arrangement which is engageable with a rail arrangement for moving said apparatus along said rail arrangement. Due to the fact that the apparatus according to the present subject matter is applicable to a joining operation for joining blade sections for forming a blade for a large-scale wind turbine, it is convenient and advantageous to provide an option of moving said apparatus in relation to the blade sections to be joined rather than moving the blade sections while the apparatus is stationary. Based on the arrangement of this embodiment, a disassembling operation of said apparatus is not required in case that the apparatus is to be positioned at a specific longitudinal position of the blade section to be joined. Further, the sliding arrangement facilitates the assembling operation of a multi-section blade which includes more than one joint.

According to an embodiment of the present subject matter, the apparatus is operated to contract a cavity provided in the joining end portion of one of said blade sections by pressing said joining portion when received in said pressing space. As stated above, the apparatus for assembling blade sections is applicable for blade sections having specific properties. The specific operation for assembling said applicable blade sections includes the requirement of contracting the cavity which is provided in the joining end portion of one of said blade sections. Consequently, the apparatus is applicable to such blade sections which are designed such that a cavity is present in a joining end portion of at least one blade section which is contractible and expandable.

According to an embodiment of the present subject matter, the apparatus for assembling blade sections is applicable to blade sections, wherein said cavity is contractible based on the elasticity or deformability of the material of said blade section having said cavity and/or wherein said cavity is contractible based on the form or shape of the joining end portion having said cavity.

According to an embodiment of the present subject matter, the apparatus is applicable to blade sections, wherein at least one slit is provided in a joining end portion having said cavity, said at least one slit extending from said cavity to an outer surface of the joining end portion. Consequently, the apparatus according to the present subject matter is applicable to blades sections which are joined by a joining operation in which a cavity which is provided in at least one of said blade sections can be contracted due to the presence of at least one slit which extends from said cavity to the outer surface of the joining end portion. Therefore, the apparatus according to the present subject matter is preferably applicable to blade sections, wherein at least one of said blade sections comprises a cavity which has an inner dimension or shape which is variable in response to a pressure which is exerted to the outer surface of said blade section having said cavity. This variable property with respect to the inner shape of said cavity is created by providing at least one slit as stated above.

According to an embodiment of the present subject matter, the apparatus is applicable to blade sections having at least one slit which is provided in the joining end portion of one of said blade sections. Said apparatus is operated to close said at least one slit by pressing said joining end portion of the respective blade section having said cavity when received in said pressing space. As a consequence, the apparatus is operative for specific blade sections which are joined by pressing outer surfaces of at least one of said blade sections, thereby closing at least one slit and thus contracting the cavity in order to join the blade sections to each other.

According to an embodiment of the present subject matter, an inner shape of the said cavity is adjustable or variable by pressing said joining end portion having said cavity to an outer shape of a protrusion which is formed at the joining end portion of the other of said blade sections and which is inserted in said cavity. In the course of operation of the apparatus, the apparatus is applied to the blade sections which are preassembled and received in the pressing space. The apparatus is applicable to blade sections in which one blade section comprises a least one cavity and the other of said blade sections comprises at least one protrusion which is insertable into said at least one cavity. In the applicable operation of the apparatus, the preassembled blade sections are arranged such that the protrusion is inserted into the cavity when expanded or enlarged such that the apparatus is adapted to join such blade sections by pressing the outer surface of at least the blade section having the cavity in order to contract the cavity. By such an operation, the cavity is contracted in order to approach to the outer shape of the protrusion which is formed at the joining end portion of the other of said blade sections and which is inserted in said cavity.

According to an embodiment of the present subject matter, the apparatus further comprises a power supply connector for supplying the required power for operating said apparatus. The power supply connector is connectable to a disconnectable external power line. Consequently, the apparatus is movable to the required position and can be supplied by the required power through said power connector when connected to said power line after the apparatus is positioned at the predetermined site or location. The power supply connector can be provided for supplying power to said heating means, to said spindle drive or hydraulic drive means as well as to the supply means and any control or detection means provided in said apparatus.

According to an embodiment of the present subject matter, a pressure controlling means is arranged to control the pressure exerted by said at least two members. The pressure which is exerted by said at least two members is applicable to the blade section having the cavity and can be controlled to a predetermined pressure for bringing the cavity to the contracted position which enhances the operation for joining the blade sections. The pressure control means can include a pressure or force detecting means and can be associated with the moving means.

According to an embodiment of the present subject matter, a temperature controlling means is arranged to control a temperature of said fluid or resin or adhesive fluid supplied by said supply means.

According to an embodiment of the present subject matter, a heat controlling means is arranged to control said heating means for curing said resin and/or to determine a curing time.

Thus, controlling means is provided for control the above mentioned subjects. As a consequence, it is possible to optimize the operation of the apparatus with respect to temperature, time, pressure, and the like which is standardized for a specific operation, type and which can be predefined by experience or based on empiric information or experiments.

According to the basic concept of the present subject matter, a method of operating an apparatus for assembling blade sections is provided. The apparatus which is operatable by this method is discussed above. The method comprises the following steps:
- moving said apparatus to said joining end portions with said blade sections to be assembled being sandwiched between said members;
- operating said moving means to exert a pressure from said at least two members to said joining end portions;
- operating said supply means to supply resin to said boundary portion between said blade sections;
- curing said resin; and
- operating said moving means to release the pressure exerted from said at least two members to said joining end portions after curing said resin.

The method of operating the apparatus is applicable to the above discussed blade sections having specific properties. According to the above indicated method of operating the apparatus, the apparatus is moved to the joining end portion to enable that said moving means can exert a pressure from said at least two members to said joining end portions. According to the basic concept of the present subject matter, the pressure is exerted to the outer surface of said blade sections. Consequently, the method is applicable to such blade sections which include at least one cavity which have a variable shape or in which the cavity is contractible. Further, the method includes supplying resin to the boundary portion between said blade sections which forms a permanent joint between the blade section after curing the resin.

According to an embodiment of the present subject matter, the amount of resin discharged from said discharge means is monitored and the supply means is controlled based on the monitored amount of discharged resin. Due to the fact that the flow path provided in the boundary between the blade sections has a predetermined volume and the amount of supplied resin is predefined, the amount of discharged resin can provide information on the complete filling of the flow path from said resin. Consequently, this procedure enhances the quality of the joint between the blade sections.

According to an embodiment of the present subject matter, the amount of resin discharged from said discharge means is monitored and the amount of resin supplied by said supply means is monitored. Further, according to this embodiment, a correct operation of said apparatus is confirmed based on the monitored amount of supplied and discharged resin. Due to the fact that the flow path provided in the boundary between the blade sections is predefined, there is a specific correlation between the amount of supplied resin and the amount of discharged resin. In case that the correlation is not met, this information can be employed to obtain information of an incorrect operation, e.g., based on a leakage of resin from the flow path or the like. In case that the correlation is met, it is confirmed that the filling process has been completed properly.

According to an embodiment of the present subject matter, the resin is a thermosetting resin, wherein the method further comprises a step of applying heat to said joining end portions for curing said thermosetting resin. Thermosetting resin has a high strength and can provide an optimum joint between the blade sections after curing said thermosetting resin based on the application of heat. According to the basic concept of the present subject matter, a method of assembling two blade segments for forming a blade for a wind turbine rotor using the above discussed apparatus is provided. The method of assembling two blade segments comprises the following steps:
- preassembling said blade by inserting a protrusion provided at one of said blade sections into a cavity provided in the other of said blade sections;
- positioning said apparatus at a transition of said blade sections;
- pressing said members to said blade sections;
- supplying a predetermined amount of resin into a boundary portion between said blade sections;
- curing said resin;
- removing said members.

According to an embodiment of the present subject matter, the method of assembling two blade segments comprises the step of contracting said cavity by pressing said members.

According to an embodiment of the present subject matter, the method of assembling two blade segments comprises closing at least one slit by the step of pressing, wherein said at least one slit is provided in said blade section having said cavity and extends from an inner surface of said cavity to an outer surface of said blade section having said cavity.

### BRIEF DESCRIPTION OF THE DRAWINGS

Fig. 1 shows the apparatus for assembling blade sections for forming a blade according to an embodiment in a three-dimensional view.
Fig. 2 shows the apparatus of Fig. 1 in a side view;
Fig. 3 shows the apparatus of Fig. 1 in a top view;
Fig. 4 shows a transition of a first form of blade sections to which the apparatus of the embodiment is applicable.
Fig. 5 shows a transition of a second form of blade sections to which the apparatus of the embodiment is applicable.

In the following, an embodiment of the present subject matter is explained based on the drawings. It is noted that the drawings show a specific embodiment as explained below and blade sections to which the apparatus is applicable. Further alternative modifications of the embodiment which are at least in part not illustrated are specified in the following description:

### DESCRIPTION OF THE EMBODIMENT

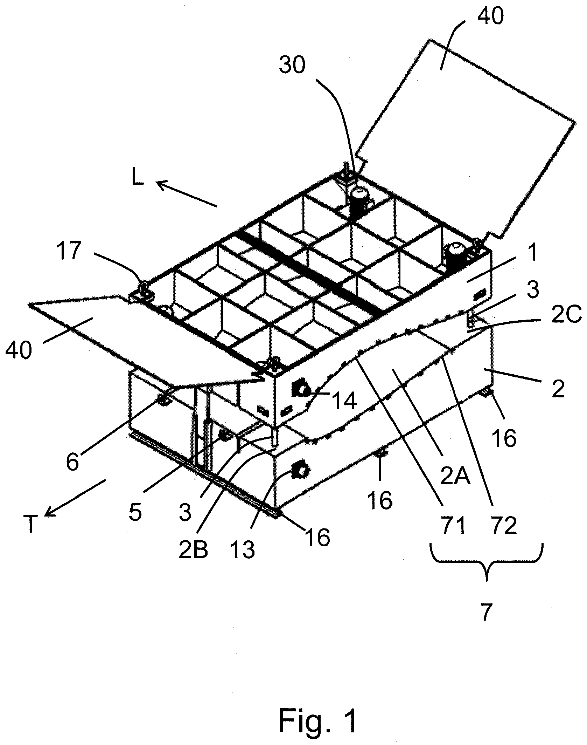

Fig. 1 shows the apparatus for assembling blade sections for forming a blade according to the embodiment. In the following, the components forming the apparatus will be explained first.

The apparatus shown in Fig. 1 comprises two members 1, 2 which are arranged in a spaced relationship. One of the members 1, 2 is arranged on top of the other of the members. In the following, a top member 1 which is arranged on top of a bottom member 2 will be defined. It is noted that this definition is only used for explaining the embodiment and does not restrict the scope as the apparatus can be used in an orientation which differs from the orientation shown in Fig. 1.

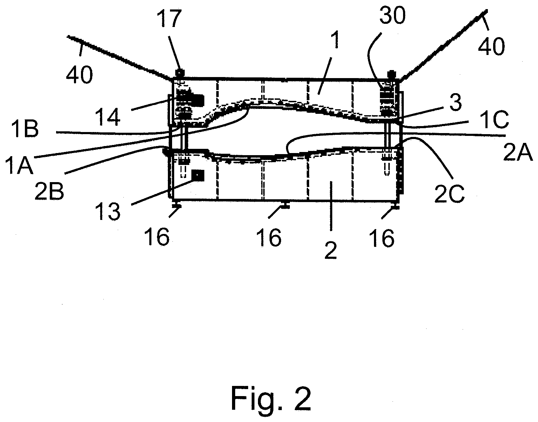

As shown in Fig. 2, the top member 1 includes a surface 1A and the bottom member includes a surface 2A. The surfaces 1A, 2A are opposed to each other in order to create a pressing space there between. The surfaces 1A, 2A are formed by sheet metal or a similar material. The surfaces 1A, 2A are provided with a specific profile which is designed in compliance with a predetermined outer appearance of a blade to be discussed below.

The bottom member 2 is formed as box-shaped member with the sheet metal portion forming the surface 2A on top. The top member 1 is formed as similar box-shaped member comprising the sheet metal forming the surface 1A which is oriented to a bottom and, as such, towards the surface 2A of the bottom member 2.

The top member 1 is attached to the bottom member 2 by spindles 3 which are rod-shaped members and which are provided with an outer thread on the outer circumference which is engaged to an inner threat in order to form a screw mechanism. In the example shown in Fig. 1, four spindles 3 are provided, wherein each spindle 3 is situated in the area of a corner of the box-shaped top and bottom members 1, 2. In the example shown in Fig. 1, spindle drives 30 embodied as electric drive in the present embodiment are arranged in the top member 1. Each spindle drive 30 is connected to a respective spindle 3 in order to rotate the spindles 3 in response to an actuation of the spindle drives 30.

An inner thread is provided in the bottom member 2 corresponding to each of the spindle 3. The inner thread is not shown and is embodied as nut member which is fixedly mounted to the bottom member 2 and engaged to the outer thread of the respective spindle 3. Upon rotating the spindle 3 in response to an operation of the spindle drive 30, the distance between the top member 1 and the bottom member 2 is adjustable.

On top of the top member 1, lid members 40 are provided in order to close the space in which the spindle drives 30 are provided. In the present embodiment, two lid members 40 are provided which are linked to the top member 1 via hinge members such that the lid members 40 are tiltable in order to open or close the space in which the spindle drives 30 are arranged.

The apparatus shown in Fig. 1 has a longitudinal direction which is in compliance with the longitudinal direction of a blade or blade segments to be assembled by the apparatus when received between the top member 1 and the bottom member 2. The longitudinal direction is shown in Fig. 1 with an arrow L. A lateral direction is defined as perpendicular direction with respect to the longitudinal direction, wherein the lateral direction is shown by a respective arrow T in Fig. 1.

As shown in Fig. 1, the surfaces 1A, 2A are formed with a specific profile which is defined based on the outer appearance of the blade or the blade sections to be assembled by the apparatus as discussed above. On the lateral sides of each of the surfaces 1A, 2A plane sections 1B, 1C, 2B, 2C are arranged as shown in Fig. 2. On one side and the other side of the surface 1A of the top member 1, plane sections 1B, 1C are respectively formed. In a similar manner, on the lateral sides of the surface 2A of the bottom member 2, plane sections 2B, 2C are respectively arranged. The plane sections 1B, 2B on one lateral side and the plane sections 1C, 2C on the other lateral side are parallel surfaces which are opposed to each other. The plane sections which are opposed to each other can be brought into abutment to each other by operating the spindle drives 30 such that the top member 1 is moved towards the bottom member 2. When an abutment between the opposed plane sections is achieved by operating the spindle drives 30, a closed condition of the apparatus is achieved in which a pressing space is formed which is defined by the surface 2A of the bottom member 2 and the surface 1A of the top member 1. In the closed state of the apparatus, the inner contour of the pressing space corresponds to the outer appearance of the blade to be formed by the blade sections at the transition between the blade sections to be joined by the apparatus.

In the present embodiment shown in Fig. 1, one of the plane sections of the bottom member 2 in the shown embodiment, i.e., the plane section 2B, is provided with a supply duct 5 and a discharge duct 6. The supply duct 5 and the discharge duct 6 are spaced from each other in the longitudinal direction of the apparatus. Furthermore, the supply duct 5 and the discharge duct 6 are provided such that each of the ducts opens to the lateral side surface of the bottom member 2 on one side and opens to the pressing space formed by the surfaces 1A, 2A when the apparatus is in the closed position. The supply duct 5 and the discharge duct 6 are positioned close to the transition between the top member 1 and the bottom member 2, i.e., in the area of transition between the surface 1A of the top member 1 and the surface 2A of the bottom member 2 when the apparatus is in the closed position.

Both the bottom member 2 and the top member 1 are provided with a heating means 7. In particular, the heating means comprises a bottom heating arrangement 72 provided for the bottom member 2 which is arranged at or in close connection to the member forming the surface 2A of the bottom member 2, and a top heating arrangement 71 provided at or close to the member forming the surface 1A of the top member 1. In particular, the heating arrangements 71, 72 are embodied as electrical heating, i.e., as resistant-based heating which are arranged on the backside of the sheet metal which form the respective surfaces 1A, 2A of the top member 1 and the bottom member 2. Consequently, by supplying energy to the respective heating arrangements 71, 72, the surfaces 1A, 2A can be brought to a predetermined temperature to be applied to the outer surface of the blade to be formed by the apparatus.

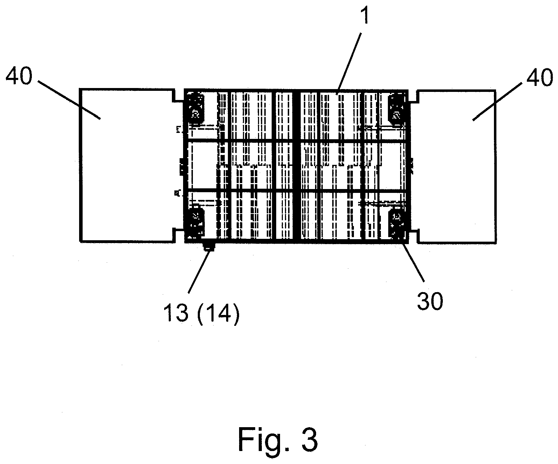

In the embodiment shown in Figs. 1-3, power supply connectors 13, 14 are provided on longitudinal end surfaces of the top member 1 and of the bottom member 2 respectively. That is, a power supply connector 14 is provided for the top member 1 whereas a power supply connector 13 is provided for the bottom member 2. Each of the power supply connectors 13, 14 is connectable to an external power source, such as an electric power supply device, in order to supply the required power to the elements which make use of such power, such as the spindle drives 30 and the heating arrangements 71, 72 and other devices.

The bottom member 2 is provided with a guide arrangement which is formed by guides 16 which are provided on the bottom side of the bottom member 2. In the present embodiment shown in Fig. 1 and 2, three guides 16 are provided and are aligned with the longitudinal direction L and spaced at equal distances.

The guides 16 can be brought into engagement with rails (not shown in the drawings) in order to enable that the apparatus can be shifted by sliding the guides 16 on the rails in a longitudinal direction. The specific purpose of this arrangement is discussed below.

On top of the top member 1, in particular, in the area of the corners of the top member 1, transport members 17, such as hooks or rings are provided. A crane or the like can be connected to the transport members 17 such that the apparatus having a remarkable weight can be positioned to a predetermined location, such as on the rails in order to be shifted by sliding the apparatus with the guide 16 being in sliding engagement with the rails.

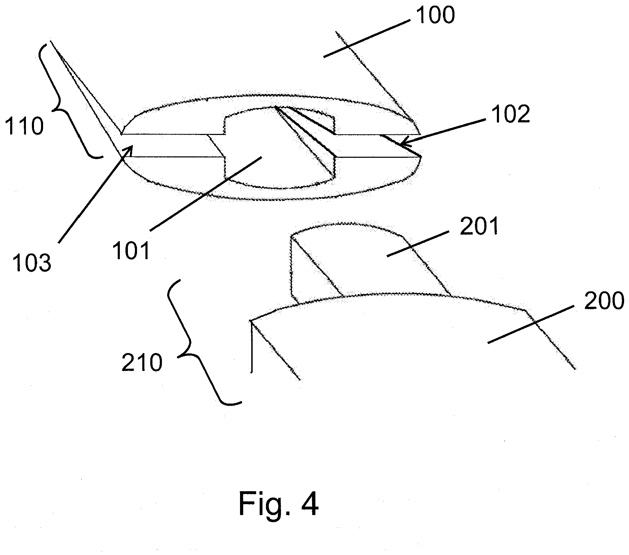

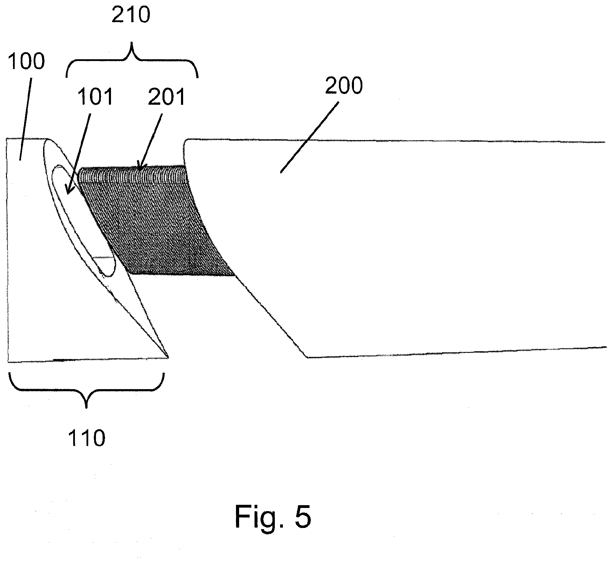

In the following, the operation of the apparatus according to the present embodiment is explained in detail. It is noted that the first and second forms of blade sections shown in Fig. 4 and Fig. 5 are only examples for the specific application of the apparatus shown in Fig. 1 and the operation of the apparatus is not limited to the structure shown in Fig. 4 and Fig. 5, and rather the apparatus is applicable to blade sections having the following properties:

Blade sections 100, 200 which are adapted to be assembled by the apparatus shown in Figs. 1-3 comprise a cavity 101 in one joining end portion 110 of one of the blade sections and a protrusion 201 protruding from a joining end portion 210 of the other of the blade sections. The protrusion 201 of the other of the blade sections is insertable into the cavity 101 of the one of the blade sections. Furthermore, the cavity 101 which is provided in the joining end portion 110 of said one of the blade sections must have a specific property of being contractible from an expanded or enlarged state in order to vary the shape of the inner surface of the cavity 101 in order to comply with the outer surface of the protrusion 201 provided at the other of the blade sections.

Furthermore, the blade sections should be adapted to be glued by resin, such as a thermosettable resin which is introducible into the boundary region between the blade sections.

For assembling blade sections for forming a blade of the above mentioned first and second forms, the blade sections are preassembled by inserting the protrusion 201 of one of the blade sections into the cavity 101 of the other of the blade sections. In this state, the cavity 101 of the blade section 100 of the above mentioned type is in the expanded or enlarged condition.

The expanded or enlarged condition and the resulting contractibility can be achieved by providing at least one interruption of material in the joining end portion 110 of the first form of the blade section 100 having the cavity 101. The interruption of material can be formed as two slits 102, 103 as shown in Fig. 4. In the preassembled condition or in a condition with no load being exerted to the joining end portion of the blade section 100 having the cavity, the inner dimensions of the cavity 101 are larger than the outer dimensions of the protrusion 201.

The expanded or enlarged condition and the resulting contractibility can be achieved without the interruption of material in the second form of the blade section 100 as shown in Fig. 5. In this form, the contractibility is achieved by properties relating to the material at least in the area of the joining end portion 110. Furthermore, the shape or form of the cavity 101 and the protrusion 201 can be set such that the cross sectional shape of the cavity 101 can be changed by exerting a pressure or force to the outer surface of the joining end portion 110.

As consequence, at least the above mentioned forms of the blade sections shown in Fig. 4 and Fig. 5 are applicable to the present subject matter. Further forms are possible which meet the requirements stated above regarding the contractibility of the cavity. In the following the explanation refers to both forms of the blade sections shown in Fig. 4 and Fig. 5.

When the blade sections are preassembled and aligned to each other, the apparatus shown in Figs. 1-3 can be put on the rail such that the guides 16 engage in a slidable manner. The apparatus is operated such that the spindle drive 30 provides an opened state of the apparatus in which the plane sections 1B, 2B and plane sections 1C, 2C are spaced such that the pressing space is enlarged or opened. This condition is shown in Fig. 1 and in Fig. 2.

As the rails are aligned to the longitudinal direction of the preassembled blade section, the apparatus can be shifted along the rails with the preassembled blade section being sandwiched by the top member 1 and the bottom member 2. The apparatus is shifted to the transition between the blade sections such that the boundary or transition in the longitudinal direction of the preassembled blade sections is positioned inside the pressing space formed by surfaces 1A, 2A. When this condition is achieved, the spindle drives 30 are operated to close the pressing space such that the surfaces 1A, 2A press the outer surface of the preassembled blade sections. During this operation, the cavity provided in one of the blade sections is brought to the contracted position such that the inner dimension of the cavity is changed in order to approach the outer dimension of the protrusion of the other of the blade sections.

With the blade sections shown in Fig. 4, the above mentioned interruption of material provided in the joining end portion of the blade section having the cavity is positioned in opposition to the supply duct 5 and the discharge duct 6. In a specific application of this apparatus, a flow path is provided in the boundary area between the blade sections, i.e., in the boundary area between the outer surface of the protrusion 201 and the inner surface of the cavity 101 which is connectable to the supply duct 5 at one end and the discharge duct 6 at the other end. Consequently, after closing the apparatus and pressing the outer surfaces of the blade sections, a flow path is formed from the supply duct 5 through the boundary area discussed above and the discharge duct 6.

With the blade sections 100, 200 shown in Fig. 5, openings for connecting to the supply duct 5 and the discharge duct 6 are provided in the joining end portion 110 as the slits are not provided in this form.

In this condition, in which the outer surface of the blade sections are pressed by the top member 1 and the bottom member 2, resin is supplied to the supply duct 5 and pressed through the flow path provided in the boundary area between the blade sections such that the resin is pressed out of the discharge duct 6 after the complete filling of the flow path.

In this situation, the resin can be cured. As the resin is cured, the pressing space is kept closed by maintaining the force exerted from the top member 1 and the bottom member 2 to the outer surface of the blade sections for a predetermined time period.

In the present embodiment, thermosetting resin is used which is cured in response to the application of heat. As discussed above, heating arrangements 71, 72 are provided which can be operated to apply heat to the outer surfaces of the blade section in this state wherein this heat is transferred by conduction towards the boundary area between the blade sections which includes the flow path which is filled by the thermosetting resin.

By applying heat to a thermosetting resin, the same is cured. After a predetermined curing time while the temperature of the heating arrangements 71, 72 is maintained as a preset value, the curing is completed.

After the completion of the curing of the thermosetting resin, the joint between the blade sections is made permanent and the pressing space is opened. By opening the pressing space, the outer appearance of the blade thus assembled is released which corresponds to a target appearance. That is, the contracted state of the cavity formed in the respective blade section is maintained. With the blade sections of Fig. 4, the interruption of material as is maintained closed due to the cured resin in the flow path and other regions which are filled by introducing such resin into the supply duct 5. After the pressing space is opened, the apparatus can be shifted to the longitudinal direction and released from the assembled blade.

The apparatus according to the present embodiment can be equipped with sensors for measuring temperature of the resin as supplied to the supply duct 5, for measuring or detecting the pressure exerted by the spindle drives 30 in cooperation with the spindles 3, temperature detecting means for detecting the temperatures at the surfaces 1A, 2A of the top member 1 and the bottom member 2 respectively and control means for controlling the respective operations, such as temperature control means for controlling the heating means 71, 72 in order to maintain a predetermined temperature and pressure control means for controlling the operation of the spindle drives 30 in order to maintain a predetermined pressure or force to the preassembled blade section or to open/close the pressing space.

Furthermore, a metering device (not shown in the drawings) can be provided at the supply duct 5 in order to detect the amount of resin supplied to the supply duct 5. In this context, a detecting means (not shown in the drawings) for detecting the amount of resin discharged from the discharge duct 6 can be provided and the detecting results of the metering device and the detecting means for detecting the amount of discharge can be employed as follows.

In the course of supplying resin to the supply duct 5, the amount of resin as introduced into the supply duct 5 is known. Furthermore, the amount of resin for completely filling the flow path provided in the boundary area between the blade sections is known for a specific blade assembly. In the course of supplying the resin to the supply duct 5, the flow path is filled and an overflow of resin is discharged from the discharge duct 6. The discharged resin is detected and the amount of discharged resin is compared to a target discharge amount which is predefined based on known data regarding the specific blade assembly.

In case that the detected discharge amount at the end of the filling operation for filling the flow path is in conformity with the target amount, the correct filling of the flow path is confirmed. In case that less than the target discharge amount is detected at the discharge duct 6, a leakage of resin can be determined. Further, in case that more than the target discharge amount is detected at the discharge duct 6, an additional problem in the flow path, such as a clogging or the like, can be determined.

The present embodiment can be modified as follows.

The spindle drives 30 can be embodied as hydraulic means driven by hydraulic pressure or other suitable mean as long as the movable property of the top member 1 with respect to the bottom member 2 is achieved. The spindle drives 30 can be optionally operated manually.

The heating arrangements 71, 72 can be replaced by another concept, such as a fluid heating using heat transfer members or a radiation heating using radiation for heating the surfaces 1A, 2A of the top member 1 and the bottom member 2, respectively.

The metering and detection of the supply and discharge of the resin is not required but leads to a preferable embodiment enhancing the quality of the assembled blade sections.

The resin is a thermosetting resin in the present embodiment. However, it is possible to employ a resin which is cured without the influence of an increased temperature.

The blade sections and the structures of the joining end portions thereof are not limited to the above application. As further application, the protrusion and/or the cavity provided in the respective blade sections can be formed with engagement means, such as serrations, which are engageable to each other by contracting the cavity provided in one of the blade sections.

In this case, by contracting the cavity, a locked joint between the inner surface of the cavity and the outer surface of the protrusion is achieved which enhances the strength of the joint between the blade section.

Further, the blade sections can be provided with more than one cavity and more than one protrusion.

The shape of the surfaces 1A and 2A provided in the top member 1 and the bottom member 2, respectively in Fig. 1 and Fig. 2 are only an example and can be adapted to the outer appearance of the blade sections to which the apparatus is applied. That is, a specific type of blade which is formed by blade sections having a specific outer appearance is reflected in the shape of the pressing space of the apparatus. It is possible to form the apparatus with replaceable members for adapting the shape of the pressing space to the required shape for a specific application.

It is possible to apply the apparatus to blade sections which achieve the contracted position when no force is exerted to the joining end portion of the blade section having the cavity, as stated above. As modification, the blade section having the cavity can be arranged to achieve an intermediate position when no force is exerted, which is between the contracted and the non-contracted or expanded position. The complete expansion of the cavity can be achieved by introducing the protrusion of the other blade section. As further alternative, the expansion can be achieved by applying a corresponding force to the non-contracted cavity.

## Claims

1. An apparatus for assembling blade sections for forming a blade, the apparatus comprising:
• at least two members (1, 2) movable with respect to each other, said members having respective opposing surfaces (1A, 2A) forming a pressing space, said pressing space being adapted to receive respective joining end portions (110, 210) of said blade sections to be assembled;
• moving means (3) for moving said members (1, 2) with respect to each other;
• control means for controlling said moving means (3);
• supply means (5) for supplying a fluid into a boundary portion between said blade sections when received in said space,
said control means controlling said moving means (3) to exert a predetermined pressure to at least one of said joining end portions (110, 210) of said blade sections when received in said pressing space,
wherein said supply means (5) is arranged to supply said fluid into an inlet of a flow path which is provided in said boundary portion between said blade sections when received in said pressing space,
further comprising supply monitoring means for monitoring an amount of fluid supplied by said supply means (5).

2. The apparatus according to claim 1, wherein said members (1, 2) are movable with respect to each other in order to close or open said pressing space and/or wherein when said pressing space is closed said opposing surfaces (1A, 2A) are provided with a profile which substantially corresponds to an outer profile of said joining end portions (110, 210) of said blade sections when assembled.

3. The apparatus according to one of the preceding claims, said apparatus further comprising discharge means (6) being arranged to discharge said fluid from an outlet of said flow path.

4. The apparatus according to claim 1 or 3, further comprising discharge monitoring means for monitoring an amount of fluid discharged from said discharge means (6).

5. The apparatus according to claim 4, wherein said supply means (5) is controllable based on information obtained from said supply monitoring means and/or based on information obtained from said discharge monitoring means.

6. The apparatus according to one of the preceding claims, further comprising heating means (7) for applying heat to said joining end portions of said blade sections when received in said pressing space and/or further comprising a metering device for metering an amount of fluid supplied by said supply means (5).

7. The apparatus according to one of the preceding claims, wherein said fluid is a resin, preferably a thermosetting resin.

8. The apparatus according to one of the preceding claims, wherein said moving means (3) is formed as at least one threaded spindle connecting said at least two members (1, 2), preferably wherein said at least one threaded spindle is drivable by a spindle drive (30).

9. The apparatus according to one of the preceding claims, wherein said moving means (3) is formed as at least one hydraulic actuator and/or
wherein one of said at least two members (1, 2) is provided with a guide arrangement (16) which is engagable with a rail arrangement (12) for moving said apparatus along said rail arrangement (12).

10. The apparatus according to one of the preceding claims, said apparatus being operative to contract a cavity provided in the joining end portion of one of said blade sections by pressing said joining end portion when received in said pressing space.

11. The apparatus according to claim 10, wherein said cavity is contractible based on the elasticity or deformability of the material of said blade section having said cavity.

12. The apparatus according to 10 or 11, wherein said cavity is contractible based on the form or shape of the joining end portion having said cavity.

13. The apparatus according to one of claims 10 - 12 wherein at least one slit is provided in the joining end portion having said cavity, the at least one slit extending from said cavity and an outer surface of the joining end portion,
preferably said apparatus being operative to close said at least one slit provided in the joining end portion of said one of said blade sections by pressing said joining end portion when received in said pressing space.

14. The apparatus according to one of claims 10- 13, wherein an inner shape of said cavity is adjustable by pressing said joining end portion having said cavity to an outer shape of a protrusion which is formed at the joining end portion of the other of said blade sections and which is inserted in said cavity.

15. The apparatus according to one of the preceding claims, further comprising a disconnectable power supply connector (13, 14) for supplying required power for operating said apparatus and/or
further comprising pressure controlling means arranged to control the pressure exerted by said at least two members (1, 2) and/or
further comprising temperature controlling means arranged to control a temperature of said fluid or resin supplied by said supply means (5).

16. The apparatus according to one of claims 7-15, further comprising heating controlling means arranged to control said heating means (7) for curing said resin and/or to determine a curing time.

17. The apparatus according to one of the preceding claims, wherein for supplying said fluid into said boundary portion between said blade sections, said fluid is pressurized and/or wherein for supplying said fluid into said boundary portion between said blade sections, a negative pressure is applied to said boundary portion.

18. A method of operating an apparatus for assembling blade sections according to one of claims 1-17, comprising the following steps:
• moving said apparatus to said joining end port ions with said blade sections to be assembled being sandwiched between said members (1, 2);
• operating said moving means (3) to exert a pressure from said at least two members (1, 2) to said joining end portions;
• operating said supply means (5) to supply resin to said boundary portion between said blade sections;
• curing said resin; and
• operating said moving means (3) to release the pressure exerted from said at least two members (1, 2) to said joining end portions after curing said resin.

19. The method according to claim 18, comprising monitoring an amount of resin discharged from said discharge means (6) and control ling said supply means (5) based on the monitored amount of discharged resin,
preferably comprising monitoring an amount of resin discharged from said discharge means (6) and monitoring an amount of resin supplied by said supply means (5) and confirming a correct operation of said apparatus based on the monitored amounts of supplied and discharged resin,
more preferably wherein when a correct operation of said apparatus is not confirmed, the process is terminated.

20. The method according to one of claims 18 or 19, wherein said resin is a thermosetting resin, further comprising applying heat to said joining end portions for curing said thermosetting resin,
preferably wherein the step of operating said supply means (5) to supply resin to said boundary portion between said blade sections includes applying pressure to said resin more preferably wherein the step of operating said supply means (5) to supply resin to said boundary portion between said blade sections includes applying negative pressure to said boundary portion.

21. A method of assembling two blade segments for forming a blade for a wind turbine rotor using an apparatus according to one of claims 1-17, comprising the following steps:
• preassembling said blade by inserting a protrusion provided at one of said blade sections into a cavity provided in the other of said blade sections:
• positioning said apparatus at a transition of said blade sections;
• pressing said members (1, 2) to said blade sections;
• supplying a predetermined amount of resin into a boundary portion between said blade sections:
• curing said resin;
• removing said members (1, 2),
preferably comprising the step of contracting said cavity by pressing said members (1, 2),
more preferably comprising closing at least one slit by the step of pressing, wherein said at least one slit is provided in said blade section having said cavity and extends from an inner surface of said cavity to an outer surface f said blade section having said cavity.

## Patentansprüche

1. Vorrichtung zum Zusammensetzen von Rotorblattabschnitten, um ein Rotorblatt zu bilden, wobei die Vorrichtung aufweist:
• mindestens zwei Elemente (1, 2), die in Bezug aufeinander beweglich sind, wobei die Elemente jeweils gegenüberliegende Oberflächen (1A, 2A) besitzen, die einen Pressraum bilden, wobei der Pressraum ausgelegt ist, entsprechende Verbindungsendabschnitte (110, 210) der zusammenzusetzenden Rotorblattabschnitte aufzunehmen;
• ein Bewegungsmittel (3), um die Elemente (1, 2) in Bezug aufeinander zu bewegen;
• ein Steuermittel, um das Bewegungsmittel (3) zu steuern; und
• ein Zufuhrmittel (5), um ein Fluid einem Grenzabschnitt zwischen den Rotorblattabschnitten zuzuführen, wenn sie in den Pressraum aufgenommen sind, wobei
das Steuermittel das das Bewegungsmittel (3) steuert, um einen vorgegebenen Druck auf mindestens einen der Verbindungsendabschnitte (110, 210) der Rotorblattabschnitte auszuüben, wenn sie in den Pressraum aufgenommen sind, und
das Zufuhrmittel (5) ausgelegt ist, das Fluid in einen Einlass eines Strömungsweges, der in dem Grenzabschnitt zwischen den Rotorblattabschnitten vorgesehen ist, zuzuführen, wenn sie in den Pressraum aufgenommen sind, und
ferner ein Zufuhrüberwachungsmittel aufweist, um einen Fluidbetrag zu überwachen, der durch das Zufuhrmittel (5) zugeführt wird.

2. Vorrichtung nach Anspruch 1, wobei die Elemente (1, 2) in Bezug zueinander beweglich sind, um den Pressraum zu schließen oder zu öffnen, und/oder dann, wenn der Pressraum geschlossen ist, die gegenüberliegenden Oberflächen (1A, 2A) mit einem Profil versehen sind, das im Wesentlichen einem Außenprofil der Verbindungsendabschnitte (110, 210) der Rotorblattabschnitte im zusammengesetzten Zustand entspricht.

3. Vorrichtung nach einem der vorhergehenden Ansprüche, wobei die Vorrichtung ferner ein Abgabemittel (6) aufweist, das ausgelegt ist, das Fluid aus einem Auslass des Strömungsweges abzugeben.

4. Vorrichtung nach Anspruch 1 oder 3, die ferner ein Abgabeüberwachungsmittel aufweist, um eine von dem Abgabemittel (6) abgegebene Fluidmenge zu überwachen.

5. Vorrichtung nach Anspruch 4, wobei das Zufuhrmittel (5) auf der Grundlage von Informationen, die von dem Zufuhrüberwachungsmittel erhalten wurden, und/oder auf der Grundlage von Informationen, die von dem Abgabeüberwachungsmittel erhalten wurden, steuerbar ist.

6. Vorrichtung nach einem der vorhergehenden Ansprüche, die ferner ein Heizmittel (7) aufweist, um Wärme auf die Verbindungsendabschnitte der Rotorblattabschnitte aufzubringen, wenn sie in dem Pressraum aufgenommen sind, und/oder die ferner eine Dosiervorrichtung aufweist, um eine Menge von Fluid zu dosieren, die durch das Zufuhrmittel (5) zugeführt wird.

7. Vorrichtung nach einem der vorhergehenden Ansprüche, wobei das Fluid ein Harz, bevorzugt ein wärmehärtbares Harz, ist.

8. Vorrichtung nach einem der vorhergehenden Ansprüche, wobei das Bewegungsmittel (3) als mindestens eine Gewindespindel gebildet ist, die die mindestens zwei Elemente (1, 2) verbindet, vorzugsweise wobei die mindestens eine Gewindespindel durch einen Spindelantrieb (30) ansteuerbar ist.

9. Vorrichtung nach einem der vorhergehenden Ansprüche, wobei das Bewegungsmittel (3) als mindestens ein Hydraulikaktor ausgebildet ist, und/oder
eines der beiden Elemente (1, 2) mit einer Führungsanordnung (16) versehen ist, die mit einer Schienenanordnung (12) in Eingriff gebracht werden kann, um die Vorrichtung entlang der Schienenanordnung (12) zu bewegen.

10. Vorrichtung nach einem der vorhergehenden Ansprüche, wobei die Vorrichtung betreibbar ist, einen Hohlraum, der in dem Verbindungsendabschnitt eines der Rotorblattabschnitte vorgesehen ist, durch Pressen des Verbindungsendabschnitts zusammenzuziehen, wenn er in dem Pressraum aufgenommen ist.

11. Vorrichtung nach Anspruch 10, wobei der Hohlraum auf der Grundlage der Elastizität oder Verformbarkeit des Materials des Rotorblattabschnittes, der den Hohlraum enthält, zusammengezogen werden kann.

12. Vorrichtung nach Anspruch 10 oder 11, wobei der Hohlraum auf der Grundlage der Form oder Gestalt des Verbindungsendabschnitts, der den Hohlraum enthält, zusammengezogen werden kann.

13. Vorrichtung nach einem der Ansprüche 10-12, wobei mindestens ein Schlitz in dem Verbindungsendabschnitt, der den Hohlraum enthält, vorgesehen ist, wobei der mindestens eine Schlitz von dem Hohlraum zu einer Außenfläche des Verbindungsendabschnitts verläuft,
vorzugsweise die Vorrichtung betreibbar ist, den mindestens einen Schlitz, der in dem Verbindungsendabschnitt des einen Rotorblattabschnitts vorgesehen ist, durch Pressen des Verbindungsendabschnitts zu schließen, wenn er in dem Pressraum aufgenommen ist.

14. Vorrichtung nach einem der Ansprüche 10-13, wobei eine innere Gestalt des Hohlraums durch Pressen des Verbindungsendabschnitts, der den Hohlraum enthält, zu einer äußeren Gestalt eines Vorsprungs, der an dem Verbindungsendabschnitt des anderen Rotorblattabschnitts gebildet ist und der in den Hohlraum eingesetzt ist, einstellbar ist.

15. Vorrichtung nach einem der vorhergehenden Ansprüche, die ferner aufweist: einen abtrennbaren Leistungsversorgungsverbinder (13, 14), um eine zum Betreiben der Vorrichtung nötige Leistung zuzuführen, und/oder
ein Drucksteuermittel, das ausgelegt ist, den Druck, der durch die mindestens zwei Elemente (1, 2) ausgeübt wird, zu steuern, und/oder
ein Temperatursteuermittel, das ausgelegt ist, eine Temperatur des Fluids oder des Harzes, das durch das Zufuhrmittel (5) zugeführt wird, zu steuern.

16. Vorrichtung nach einem der Ansprüche 7-15, die ferner ein Heizsteuermittel aufweist, das ausgelegt ist, das Heizmittel (7) zu steuern, um das Harz zu härten und/oder eine Härtedauer zu bestimmen.

17. Vorrichtung nach einem der vorhergehenden Ansprüche, wobei das Fluid druckbeaufschlagt ist, um das Fluid dem Grenzabschnitt zwischen den Rotorblattabschnitten zuzuführen, und/oder
wobei, um das Fluid dem Grenzabschnitt zwischen den Rotorblattabschnitten zuzuführen, ein negativer Druck auf den Grenzabschnitt ausgeübt wird.

18. Verfahren zum Betreiben einer Vorrichtung, um Rotorblattabschnitte nach einem der Ansprüche 1-17 zusammenzusetzen, das die folgenden Schritte aufweist:
• Bewegen der Vorrichtung zu den Verbindungsendabschnitten, wobei die Rotorblattabschnitte, die zusammengesetzt werden sollen, zwischen die Elemente (1, 2) gelegt werden;
• Betreiben des Bewegungsmittels (3), um einen Druck von den mindestens zwei Elementen (1, 2) auf die Verbindungsendabschnitte auszuüben;
• Betreiben des Zufuhrmittels (5), um Harz in den Grenzabschnitt zwischen den Rotorblattabschnitten zuzuführen;
• Härten des Harzes; und
• Betreiben des Bewegungsmittels (3), um den Druck, der von den mindestens zwei Elementen (1, 2) auf die Verbindungsendabschnitte ausgeübt wird, nach dem Härten des Harzes zu lösen.

19. Verfahren nach Anspruch 18, aufweisend das Überwachen einer Harzmenge, die von dem Abgabemittel (6) abgegeben wird, und das Steuern des Zufuhrmittels (5) auf der Grundlage der überwachten Menge von abgegebenem Harz,
vorzugsweise aufweisend das Überwachen einer Harzmenge, die von dem Abgabemittel (6) abgegeben wird, das Überwachen einer Harzmenge, die durch das Zufuhrmittel (5) zugeführt wird, und das Bestätigen eines korrekten Betriebs der Vorrichtung auf der Grundlage der überwachten Mengen von zugeführtem und abgegebenem Harz ,
weiter bevorzugt dass dann, wenn ein korrekter Betrieb der Vorrichtung nicht bestätigt wird, der Vorgang beendet wird.

20. Verfahren nach einem der Ansprüche 18 oder 19, wobei das Harz ein wärmehärtbares Harz ist, ferner aufweisend ein Aufbringen von Wärme auf die Verbindungsendabschnitte , um das wärmehärtbare Harz zu härten,
vorzugsweise wobei der Schritt des Betreibens des Zufuhrmittels (5), um Harz dem Grenzabschnitt zwischen den Rotorblattabschnitten zuzuführen, ein Ausüben von Druck auf das Harz beinhaltet,
weiter bevorzugt wobei der Schritt des Betreibens des Zufuhrmittels (5), um Harz dem Grenzabschnitt zwischen den Rotorblattabschnitten zuzuführen, ein Ausüben eines negativen Drucks auf den Grenzabschnitt beinhaltet.

21. Verfahren zum Zusammensetzen von zwei Rotorblattabschnitten, um einen Windkraftanlagenrotor unter Verwendung einer Vorrichtung nach einem der Ansprüche 1-17 zu bilden, das die folgenden Schritte aufweist:
• Vormontieren des Rotorblatts durch Einsetzen eines Vorsprungs, der an einem der Rotorblattabschnitte vorgesehen ist, in einen Hohlraum, der in dem anderen Rotorblattabschnitt vorgesehen ist;
• Positionieren der Vorrichtung an einem Übergang der Rotorblattabschnitte;
• Pressen der Elemente (1, 2) an die Rotorblattabschnitte;
• Zuführen einer vorgegebenen Harzmenge in einen Grenzabschnitt zwischen den Rotorblattabschnitten;
• Härten des Harzes und
• Entfernen der Elemente (1, 2),
vorzugsweise aufweisend den Schritt des Zusammenziehens des Hohlraums durch Pressen der Elemente (1, 2),
weiter bevorzugt aufweisend ein Schließen mindestens eines Schlitzes durch den Schritt des Pressens , wobei der mindestens eine Schlitz in dem Rotorblattabschnitt vorgesehen ist, der den Hohlraum besitzt, und der sich von einer Innenfläche des Hohlraums zu einer Außenfläche des Rotorblattabschnitts, der den Hohlraum enthält, erstreckt.

## Revendications

1. Appareil pour assembler des sections de pale pour former une pale, l'appareil comprenant :
• au moins deux éléments (1, 2) mobiles l'un par rapport à l'autre, lesdits éléments ayant des surfaces opposées (1A, 2A) respectives formant un espace de compression, ledit espace de compression étant adapté pour recevoir des parties d'extrémité de jonction respectives (110, 210) desdites sections de pales à assembler;
• des moyens de déplacement (3) pour déplacer lesdits éléments (1, 2) l'un par rapport à l'autre;
• des moyens de commande pour commander lesdits moyens de déplacement (3);
• un moyen d'alimentation (5) pour amener un fluide dans une partie limite entre lesdites sections de pales lorsqu'il est reçu dans ledit espace,
lesdits moyens de commande commandent lesdits moyens de déplacement (3) pour exercer une pression prédéterminée sur au moins l'une desdites parties d'extrémité de jonction (110, 210) desdites sections de pale lorsqu'elles sont reçues dans ledit espace de compression,
ledit moyen d'alimentation (5) étant agencé pour alimenter ledit fluide dans une entrée d'un chemin d'écoulement qui est prévu dans ladite partie limite entre lesdites sections de pale lorsqu'il est reçu dans ledit espace de compression,
comprenant en outre des moyens de surveillance de l'alimentation pour surveiller une quantité de fluide fournie par ledit moyen d'alimentation (5).

2. Appareil selon la revendication 1, dans lequel lesdits éléments (1, 2) sont mobiles l'un par rapport à l'autre afin de fermer ou d'ouvrir ledit espace de compression et/ou dans lequel, lorsque ledit espace de compression est fermé, lesdites surfaces opposées (1A, 2A) sont munies d'un profil qui correspond sensiblement à un profil extérieur desdites parties d'extrémité de jonction (110, 210) desdites sections de pales lorsqu'elles sont assemblées.

3. Appareil selon l'une des revendications précédentes, ledit appareil comprenant en outre des moyens de décharge (6) agencés pour décharger ledit fluide à partir d'une sortie dudit chemin d'écoulement.

4. Appareil selon la revendication 1 ou 3, comprenant en outre des moyens de surveillance de décharge pour surveiller une quantité de fluide déchargé desdits moyens de décharge (6).

5. Appareil selon la revendication 4, dans lequel ledit moyen d'alimentation (5) peut être commandé sur la base d'informations obtenues par ledit moyen de surveillance d'alimentation et/ou sur la base d'informations obtenues par ledit moyen de surveillance de décharge.

6. Appareil selon l'une des revendications précédentes, comprenant en outre des moyens de chauffage (7) pour appliquer de la chaleur auxdites parties d'extrémité de jonction desdites sections de pales lorsqu'elles sont reçues dans ledit espace de compression et/ou comprenant en outre un dispositif de dosage pour doser une quantité de fluide fournie par ledit moyen d'alimentation (5).

7. Appareil selon l'une des revendications précédentes, dans lequel ledit fluide est une résine, de préférence une résine thermodurcissable.

8. Appareil selon l'une des revendications précédentes, dans lequel ledit moyen de déplacement (3) est formé sous la forme d'au moins une broche filetée reliant lesdits au moins deux éléments (1, 2), de préférence ladite au moins une broche filetée pouvant être entraînée par un entraînement de broche (30).

9. Appareil selon l'une des revendications précédentes, dans lequel ledit moyen de déplacement (3) est formé sous la forme d'au moins un actionneur hydraulique et/ou
dans lequel l'un desdits au moins deux éléments (1, 2) est muni d'un agencement de guidage (16) qui peut être mis en prise avec un agencement de rails (12) pour déplacer ledit appareil le long dudit agencement de rails (12).

10. Appareil selon l'une des revendications précédentes, ledit appareil étant opérationnel pour contracter une cavité prévue dans la partie d'extrémité de jonction de l'une desdites sections de pales en pressant ladite partie d'extrémité de jonction lorsqu'elle est reçue dans ledit espace de compression.

11. Appareil selon la revendication 10, dans lequel ladite cavité est contractible sur la base de l'élasticité ou de la déformabilité du matériau de ladite section de pales ayant ladite cavité.

12. Appareil selon la revendication 10 ou 11, dans lequel ladite cavité est contractible sur la base de la configuration ou de la forme de la partie d'extrémité de jonction ayant ladite cavité.

13. Appareil selon l'une des revendications 10 à 12, dans lequel au moins une fente est prévue dans la partie d'extrémité de jonction ayant ladite cavité, ladite au moins une fente s'étendant à partir de ladite cavité et d'une surface extérieure de la partie d'extrémité de jonction,
de préférence, ledit appareil fonctionnant pour fermer ladite au moins une fente prévue dans la partie d'extrémité de jonction de ladite une desdites sections de pales en pressant ladite partie d'extrémité de jonction lorsqu'elle est reçue dans ledit espace de compression.

14. Appareil selon l'une des revendications 10 à 13, dans lequel une configuration intérieure de ladite cavité est ajustable en pressant ladite partie d'extrémité de jonction ayant ladite cavité de sorte à obtenir une configuration extérieure d'une protubérance qui est formée à la partie d'extrémité de jonction de l'autre desdites sections de pales et qui est insérée dans ladite cavité.

15. Appareil selon l'une des revendications précédentes, comprenant en outre un connecteur d'alimentation déconnectable (13, 14) pour fournir la puissance nécessaire pour faire fonctionner ledit appareil et/ou
comprenant en outre des moyens de commande de pression agencés pour commander la pression exercée par lesdits au moins deux éléments (1, 2) et/ou
comprenant en outre des moyens de commande de température agencés pour commander une température dudit fluide ou de ladite résine fournie par ledit moyen d'alimentation (5).

16. Appareil selon l'une des revendications 7 à 15, comprenant en outre des moyens de commande de chauffage agencés pour commander lesdits moyens de chauffage (7) pour le durcissement de ladite résine et/ou pour déterminer un temps de durcissement.

17. Appareil selon l'une des revendications précédentes, dans lequel, pour fournir ledit fluide dans ladite partie limite entre lesdites sections de pales, ledit fluide est mis sous pression et/ou dans lequel, pour fournir ledit fluide dans ladite partie limite entre lesdites sections de pale, une pression négative est appliquée à ladite partie limite.

18. Procédé de fonctionnement d'un appareil pour assembler des sections de paless selon l'une des revendications 1 à 17, comprenant les étapes consistant à :
• déplacer ledit appareil vers lesdites parties d'extrémité de jonction, lesdites sections de pales à assembler étant prises en sandwich entre lesdits éléments (1, 2);
• actionner lesdits moyens de déplacement (3) pour exercer une pression depuis lesdits au moins deux éléments (1, 2) sur lesdites parties d'extrémité de jonction;
• faire fonctionner ledit moyen d'alimentation (5) pour fournir de la résine à ladite partie limite entre lesdites sections de pales;
• durcir ladite résine; et
• actionner lesdits moyens mobiles (3) pour libérer la pression exercée par lesdits au moins deux éléments (1, 2) auxdites parties d'extrémité de jonction après durcissement de ladite résine.

19. Procédé selon la revendication 18, comprenant la surveillance d'une quantité de résine déchargée par lesdits moyens de décharge (6) et la commande dudit moyen d'alimentation (5) sur la base de la quantité surveillée de résine déchargée,
de préférence comprenant la surveillance d'une quantité de résine déchargée par ledit moyen de décharge (6) et la surveillance d'une quantité de résine fournie par ledit moyen d'alimentation (5) et la confirmation d'un fonctionnement correct dudit appareil sur la base des quantités surveillées de résine fournie et déchargée,
plus préférentiellement dans lequel, lorsqu'un fonctionnement correct dudit appareil n'est pas confirmé, le processus est terminé.

20. Procédé selon l'une des revendications 18 ou 19, dans lequel ladite résine est une résine thermodurcissable, comprenant en outre l'application de chaleur auxdites parties d'extrémité de jonction pour durcir ladite résine thermodurcissable,
de préférence dans lequel l'étape consistant à faire fonctionner ledit moyen d'alimentation (5) pour fournir de la résine à ladite partie limite entre lesdites sections de pales comprend l'application d'une pression à ladite résine,
plus préférablement dans lequel l'étape consistant à faire fonctionner ledit moyen d'alimentation (5) pour fournir de la résine à ladite partie limite entre lesdites sections de pales comprend l'application d'une pression négative à ladite partie de frontière.

21. Procédé d'assemblage de deux segments de pales pour former une pale pour un rotor d'éolienne en utilisant un appareil selon l'une des revendications 1 à 17, comprenant les étapes suivantes :
• pré-assembler ladite pale en insérant une protubérance prévue à l'une desdites sections de pales dans une cavité prévue dans l'autre desdites sections de pales;
• positionner ledit appareil au niveau d'une transition desdites sections de pales;
• presser lesdits éléments (1, 2) sur lesdites sections de pales;
• fournir une quantité prédéterminée de résine dans une partie limite entre lesdites sections de pales;
• durcir ladite résine;
• enlever lesdits éléments (1, 2),
comprenant de préférence l'étape consistant à contracter ladite cavité en pressant lesdits éléments (1, 2),
comprenant plus préférentiellement la fermeture d'au moins une fente par l'étape de compresson, dans lequel ladite au moins une fente est prévue dans ladite section de pale ayant ladite cavité et s'étend d'une surface intérieure de ladite cavité à une surface extérieure de ladite section de pale ayant ladite cavité.
